# EUROPEAN PATENT SPECIFICATION

(11) **EP 1 727 362 B1**
(45) Date of publication and mention of the grant of the patent: **12.12.2012**
(21) Application number: 06252683.5
(22) Date of filing: 23.05.2006
(51) Int. Cl.: H04N 5/44, H04N 5/445, H04N 21/482, H04N 21/431, H04N 21/485

(54) **Digital multimedia broadcasting receiver and channel managing method of the same**
Digitaler Multimedia Rundfunkempfänger und Verfahren zur Kanalverwaltung desselben
Récepteur de diffusion multimedia numérique et son procédé de gestion de canaux

(30) Priority: 25.05.2005 KR 20050044194
(43) Date of publication of application: 29.11.2006
(73) Proprietor: Samsung Electronics Co., Ltd., Suwon-si, Gyeonggi-do, 443-742 (KR)
(72) Inventor: Park, Hyun-cheol, Yeongtong-gu, Swuon-si, Gyeonggi-do (KR)
(74) Representative: Brandon, Paul Laurence

(56) References cited:
- EP-A2- 1 528 700
- WO-A1-00/46986
- US-A1- 2003 071 117
- US-A1- 2003 113 100

## Description

The present invention relates to digital multimedia broadcasting receivers and channel managing methods of the same.

Digital multimedia broadcasting (hereinafter, referred to as "DMB"), which is a recent topic of discussion, broadcasts multiple programs via a carrier frequency, similar to existing digital audio broadcasting.

DMB refers to broadcasting services that enable users who are outdoors or in motion to watch or listen to various multimedia broadcasts via multi-channels, which include video, audio, and data, through a portable or mobile receiver equipped with a non-directional antenna, by sending broadcasting signals via satellites or terrestrial relay stations.

DMB uses a long band (L-Band) in the 1452-1492 MHz range or a short band (S-Band) in the 2310-2360 MHz or 2533-2655 MHz range in order to provide mobile services differentiated from the existing fixed receiver radio broadcasting.

Most areas on earth can directly receive satellite DMB broadcasts, but some areas not in the line of sight (LOS) of a satellite can receive them using a gap filler.

The multimedia services that can be received while a user is in motion are diverse, such as multi-channel audio broadcasting, traffic information, vehicle positioning information, and weather information.

Because a DMB includes many programs carried by a carrier frequency, a user selects the carrier frequency first and then selects a desired broadcast program from the broadcast programs in the carrier frequency.

When there are several types of broadcast program types available, such as TV and radio, a user first selects a desired broadcast program type and then selects a desired broadcast program through a broadcast program list displayed according to the selection.

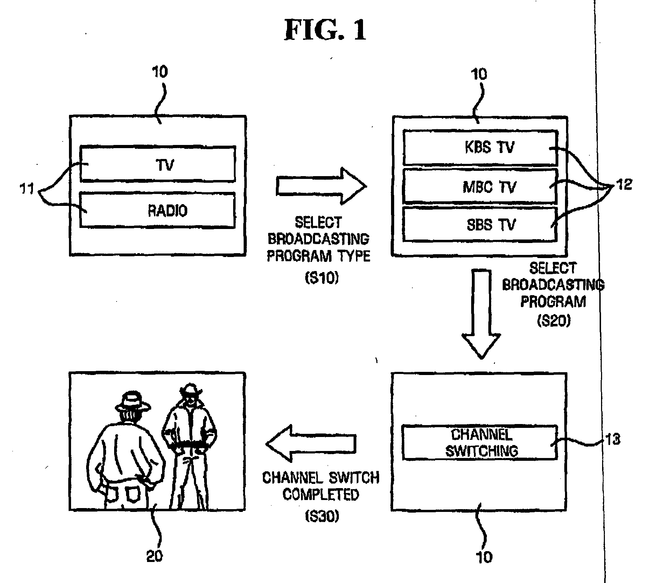

As shown in FIG. 1, a receiver that can receive the DMB displays a graphical user interface 10 through which a broadcasting type 11 can be selected. Then, a user selects a desired broadcasting type from the displayed graphical user interface 10 S10.

The receiver displays a broadcast program list 12 based on the desired broadcasting type selected by the user, via the graphical user interface 10, and then the user selects a desired broadcasting from the displayed broadcast program list S20.

The receiver provides the user with a message 13 to inform him/her that the receiver is conducting a channel switch to a channel corresponding to the desired broadcast program selected by the user. Aftcr the channel switch is completed S30, the receiver displays the desired broadcast program 20 selected by the user.

As described above, since a device capable of receiving the DMB configures the channel as provided by broadcasting stations and provides it to the user when he/she selects a desired broadcast program, the user cannot select a channel of preference.

Where broadcast programs are provided by a plurality of providers, the user has to be familiar with broadcast programs of each provider in advance, thereby causing the user to be inconvenient.

Japanese Unexamined Patent Publication No. 2002 - 344337 discloses a receiver and a program receiving method comprising displaying a user's past received record list in order to allow the user to quickly select a desired program by moving a jog lever up and down by simple operation when a channel is selected from a program list in a receiver receiving broadcast, e.g. DAB, wherein the received record list has a hierarchical structure in which one or more services are arranged under the respective ensembles of which frequencies are different from one another, and one or more service components are arranged under each service, and the program list displays a service list under the selected ensemble and a service component list under the selected service. However, this invention provides programs with only channels provided by broadcasting stations, and thus, thereby making it inconvenient for a user to select his or her favorite channel and difficult to distinguish programs provided by several providers. EP 1 528 700 discloses a DMB receiver.

Preferred embodiments of the present invention aim to provide a digital multimedia broadcasting receiver and a channel managing method using the same, which provides a user with a method for configuring various channels.

Preferred embodiments of the present invention aim to provide a digital multimedia broadcasting receiver and a channel managing method using the same, which enables a user to configure desired channels since the user can configure the channels with the channels selected by him/her.

According to an aspect of the present invention, there is provided a digital multimedia broadcasting receiver comprising: a tuner which receives a broadcasting signal including multiple broadcast programs each having a broadcast program type of one of video, audio and data carried buy 4 carrier frequency from a plurality of providers, and including a main service component and a sub-service component having a traffic message channel (TMS) and service information (SI); a demodulating unit which demodulates the received broadcasting signal; and a controller which classifies the multiple broadcast programs according to a broadcast program type and displays a broadcast program list corresponding to a plurality of broadcast program types selected by a user through a graphical user interface, wherein the broadcast program list includes an ensemble showing a provider and a service showing broadcast programs; and wherein the graphical user interface comprises:
a first area which enables the user to select. the broadcast program type;
a second area which displays the broadcast program list based on the selected service type;
a third area which displays a broadcast program selected by the user from the displayed broadcast program list.

According to another aspect of the present invention, there is provided a channel managing method of a digital multimedia broadcasting receiver comprising: receiving a broadcasting signal including multiple broadcast programs each having a broadcast program type of one of video, audio and data and carried by a carrier frequency from a plurality of providers, and including a main service component and a sub-service component having a traffic message channel (TMS) and service information (SI); demodulating the received broadcasting signal; and classifying the multiple broadcast programs according to a broadcast program type; and displaying a broadcast program list corresponding to a plurality of broadcast program types selected by a user through a graphical user interface, wherein the broadcast program list includes an ensemble showing a provider and a service showing broadcast programs; and wherein the graphical user interface comprises:
a first area which enables the user to select. the broadcast program type;
a second area which displays the broadcast program list based on the selected service type;
a third area which displays a broadcast program selected by the user from the displayed broad cast program list.
Further features of the present invention are set out in the appended claims.

The present invention will become more apparent by describing in detail exemplary embodiments thereof with reference to the attached drawings in which:
FIG. 1 illustrates a process of selecting a broadcast program according to a conventional art;
FIG. 2 is a block diagram of a digital multimedia broadcasting receiver according to an exemplary embodiment of the present invention;
FIG. 3 is a block diagram illustrating a structure of a broadcasting signal according to an exemplary embodiment of the present invention;
FIG. 4 illustrates a graphical user interface according to an exemplary embodiment of the present invention;
FIG. 5 illustrates a first area of FIG. 4;
FIG. 6 is a flowchart of a channel managing method using a digital multimedia broadcasting receiver according to an exemplary embodiment of the present invention;
FIG. 7 illustrates a graphical user interface when a service type is changed in the first area of FIG. 4.

The present invention will now be described more fully with reference to the accompanying drawings in which an exemplary embodiment of this invention is shown.

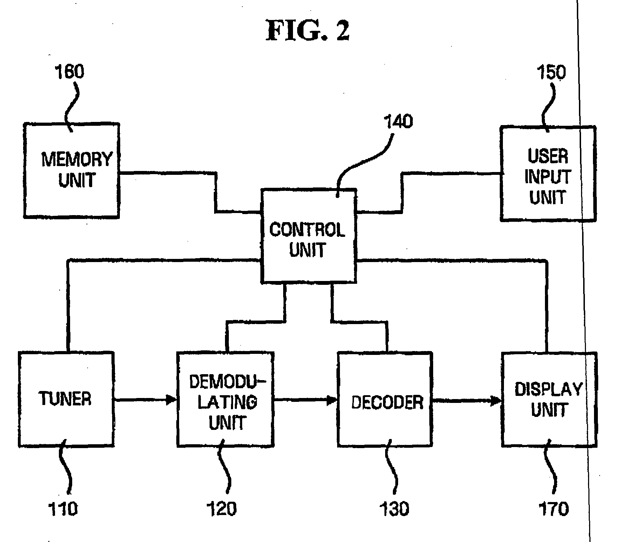

Features of the present invention and methods of accomplishing the same may be understood more readily by reference to the following detailed description of the exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification. FIG. 2 is a block diagram of a digital multimedia broadcasting receiver according to an exemplary embodiment of the present invention.

Referring to FIG. 2, the digital multimedia broadcasting receiver comprises a tuner 110 for receiving a broadcasting signal, a demodulating unit 120 for demodulating the received broadcasting signal, a decoder 130 for decoding a video signal, and a control unit 140 for extracting a broadcast program list corresponding to a broadcast program type selected by a user through a graphical user interface.

The digital multimedia broadcasting receiver may further comprise a user input unit 150 by which a user inputs an input value according to the broadcast program type, a memory unit 160 for storing information on the carrier frequency of the broadcasting signal and information on the broadcast program, and a display unit 170 for displaying the broadcast program selected by a user from the broadcast program.

Hereinafter, the carrier frequency is referred to as ensemble, and the broadcast program is referred to as service.

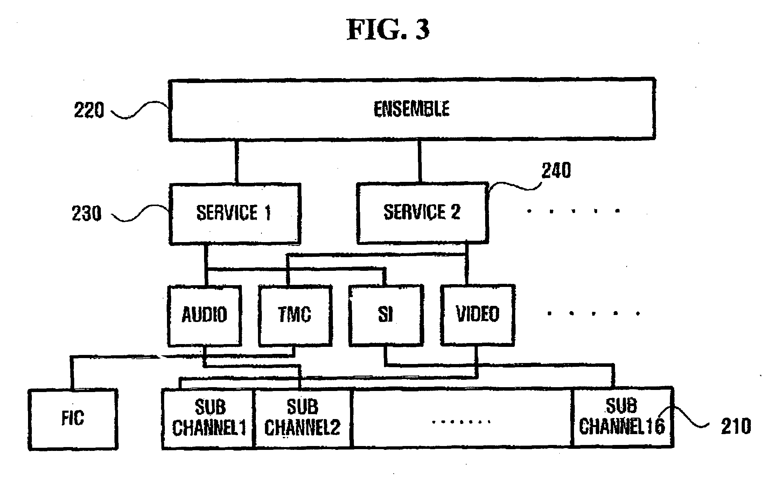

FIG. 3 is a block diagram illustrating a structure of a broadcasting signal received through the tuner 110 according to an exemplary embodiment of the present invention.

Referring to FIG. 3, the broadcasting signal received via the tuner 110 may be divided into a main service component and a sub service component. The main service component consists of a video signal and an audio signal, and the sub service component consists of a TMC (Traffic Message Channel) and SI (Service Information). In the DMB, the main service component and the sub service component may be transmitted via as many as 16 sub-channels 210. The main service component and the SI in the sub service component are transmitted via the sub-channel 210, but the TMC in the sub service component is transmitted separately from the sub channel 210 via the FIDC (Fast Information Data Channel) (not shown) of the FIC (Fast Information Channel). A plurality of services 230 and 240 included in an ensemble 220 may consist of one main service component and one sub service component. The SI on a service may be included in the data signal described above. The control unit 140 may store the SI in the memory unit 160. The stored SI consists of information on a concerned service and information on the ensemble in which the concerned service is included. For example, information on the ensemble "KBS" and information on the concerned services "KBS TV" and "KBS FM" may be stored in the memory unit 160. To select a desired service, a user may request a graphical user interface via the user input unit 150. The control unit 140 may display the graphical user interface at the user's request.

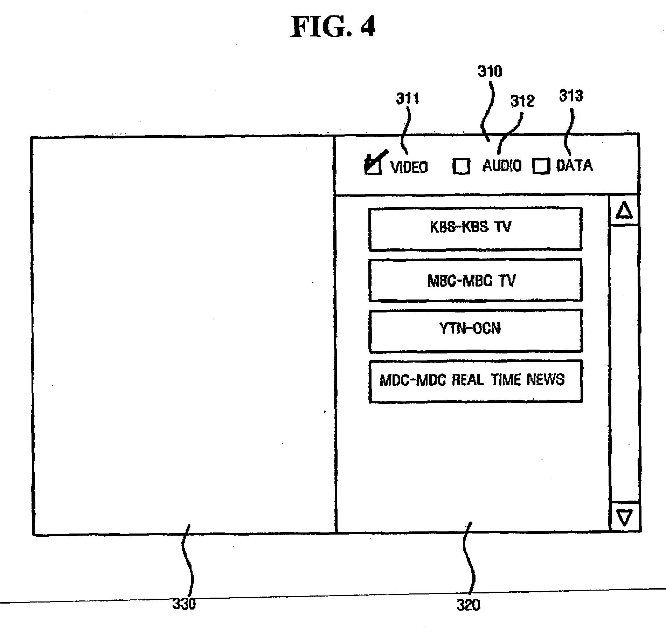

FIG. 4 illustrates a graphical user interface according to an exemplary embodiment of the present invention.

Referring to FIG. 4, the graphical user interface comprises a first area 310 where a user can select a service type, a second area 320 where a service list based on the selected service type is displayed, and a third area 330 where the service is displayed.

In the first area 310, plural service type items 311, 312, and 313 are displayed in order to enable a user to select a desired service type. According to an exemplary embodiment, the user may select at least one service type or plural service types from the service type items 311, 312, and 313. In the present embodiment, it has been described by way of example that a service type list consists of video, audio, and data; however, is not limited thereto. Items may be added, deleted, and changed. Also, a case where the video signal is TV broadcasting, the audio signal is radio broadcasting, and the data signal is additional data, separate from TV broadcasting and radio broadcasting, will be described as an example.

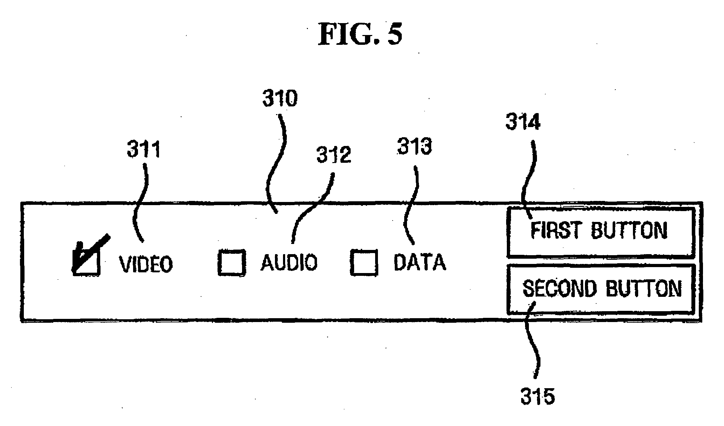

As illustrated in FIG. 5, the first area 310 may further comprise a first button 314 to display a service list (designated in advance by the user) via the second area 320, and a second button 315 to display a list of every service provided to the user. Functions of the first button 314 and the second button 315, and the number of buttons may be changed depending upon use and need.

In the second area 320, the service list corresponding to the service type selected in the first area 310 may be displayed. The displayed service list may consist of ensemble information and service information. As described above, when the service information is "KBS TV", the service list displayed via the second area 320 may have the format "KBS-KBS TV" which is ensemble-service information together with ensemble information including the concerned service "KBS". Accordingly, the user can easily identify the provider who provides the concerned service among several providers.

A channel managing method using the digital multimedia broadcasting receiver according to an exemplary embodiment of the present invention will be described in detail.

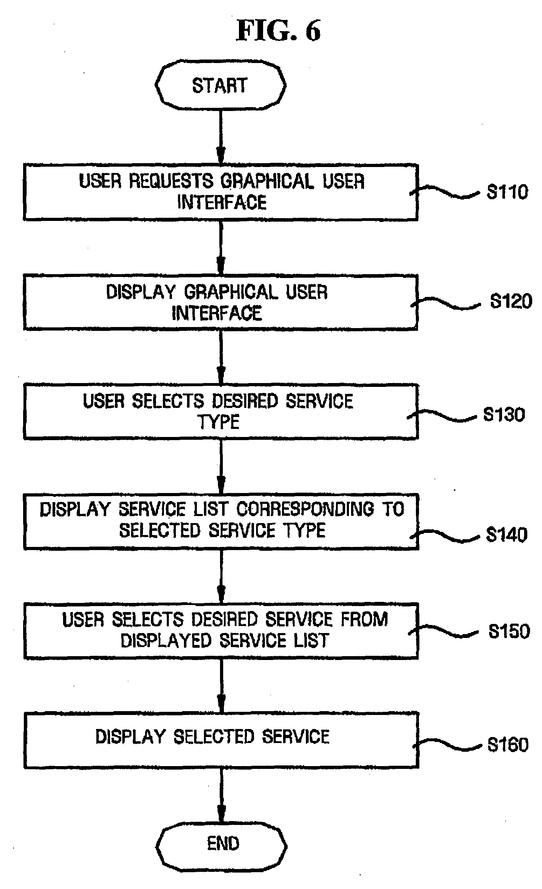

FIG. 6 is a flowchart of a method of a digital multimedia broadcasting receiver according to an exemplary embodiment of the present invention.

As illustrated, a user requests a graphical user interface via the user input unit 150 in order to select a desired service S 110.

The control unit 140 displays the graphical user interface through which the user can select a service type, via the user interface display unit 170 S120. The graphical user interface is the as same as that described above with respect to FIG. 4. The user can select a desired service type from service type items 311, 312 and 313 displayed in the first area 310 S130. When the user does not select a service type in the first area 310, the service type "default" may be selected.

When the user selects a service type via the displayed graphical user interface S 130, the control unit 140 displays a service list corresponding to the selected service type via the graphical user interface S140. The service list may be displayed via the second area 320 of the graphical user interface of FIG. 4 in the ensemble-service format.

Specifically, when the video type list 311 is selected as a service type item, the user can change the selected service type.

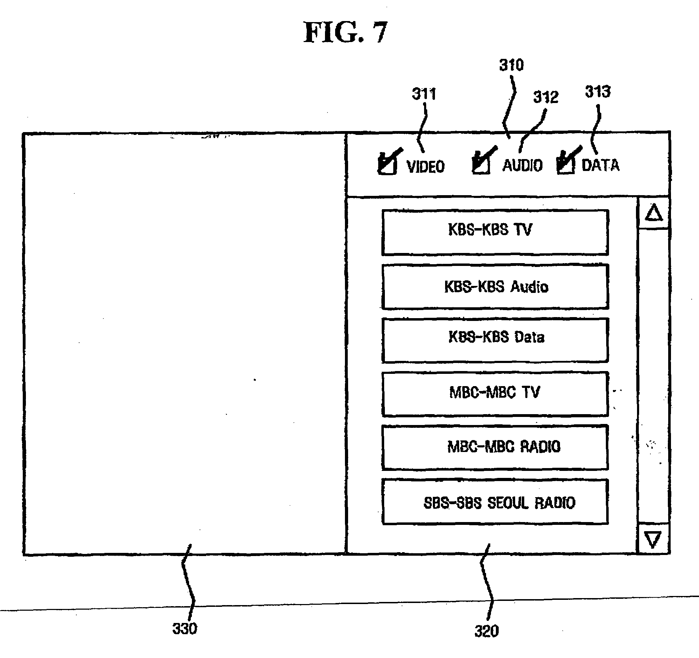

For example, when the user selects the video type 311, the audio type 312, and the data type 313 as the service type items, the service list displayed in the second area 320 changes according to the selected service types, as illustrated in FIG. 7.

The user selects a desired service from the service list displayed via then graphical user interface S 150.

The control unit 140 allows the service selected by the user to be displayed via the third area 330 S160. The graphical user interface is displayed via the display unit 170.

As described above, the channel managing method of the digital multimedia broadcasting receiver can reduce the number of steps required to a select desired service, as compared with the conventional method by which the user selects a service type and then selects a service according to the selected service type.

The first area 310 of the graphical user interface of FIG. 4, may contain a first button 314, by which the user can store his/her favorite services. The first button 314 displays only the services selected by a user from the service list displayed through the second area 320, without checking the services included in each ensemble. Accordingly, the user can display only favorite service list via the first button 314 by separately collecting his/her items. The second button 315 is used when a user desires to check all the service items currently provided.

Because the service list displayed via the second area 320 is in the format "ensemble-service", the user can easily identify the provider. In an exemplary embodiment of the present invention, because the present invention assumes that an ensemble refers to a provider, the user can easily identify the provider based on the ensemble.

As described above, the digital multimedia broadcasting receiver and a channel managing method of the same according to preferred embodiments of the present invention produce one or more of the effects described below. DMB services are provided on a service basis, not on an ensemble basis, and a user can easily switch services.

Because a service list corresponding to a service type selected by the user is in the format of ensemble and service, he or she can easily identify a service provider among several service providers.

In addition, the channel can be reconfigured according to the user's favorite channel(s) or service type(s) as well as the channel(s) provided by the provider(s), thereby enhancing the user's convenience.

Although the apparatus and method for managing a file system according to the present invention has been described in connection with the exemplary embodiments of the present invention, it will be apparent to those skilled in the art that various modifications and changes may be made thereto without departing from the scope of the claims. Therefore, it should be understood that the above embodiments are not limitative, but illustrative in all aspects.

## Claims

1. A digital multimedia broadcasting receiver comprising:
a tuner (110) which receives a broadcasting signal including multiple broadcast programs each having a broadcast program type of one of video, audio and data carried by a carrier frequency from a plurality of providers, and including a main service component and a sub-service component having a traffic message channel (TMS) and service information (SI);
a demodulating unit (120) which demodulates the received broadcasting signal; and
a controller (140) which classifies the multiple broadcast programs according to a broadcast program type and displays a broadcast program list corresponding to a plurality of broadcast program types selected by a user through a graphical user interface (170),
wherein the broadcast program list includes an ensemble showing a provider and a service showing broadcast programs: and
wherein the graphical user interface (170) comprises:
a first area (310) which enables a user to select the broadcast program type;
a second area (320) which displays the broadcast program list based on the selected service type; and
a third area (330) which displays a broadcast program selected by the user from the displayed broadcast program list.

2. The receiver of claim 1, wherein the broadcast program list displayed in the second area (320) is arranged according to the carrier frequency.

3. The receiver of claim 1, wherein the broadcast program list displayed in the second area (320) is arranged according to the broadcast program type.

4. The receiver of any one of claims 1-3, wherein the first area (310) further comprises:
a first button (314) which displays a broadcast program list of broadcast programs designated in advance by the user; and
a second button (315) which displays a broadcast program list of all the broadcast programs that can be provided to the user.

5. The receiver of any preceding claim, further comprising a memory (160) which stores information regarding the carrier frequency, wherein the information comprises the broadcast program type.

6. A channel managing method of a digital multimedia broadcasting receiver comprising:
receiving a broadcasting signal including multiple broadcast programs each having a broadcast program type of one of video, audio and data and carried by a carrier frequency from a plurality of providers, and including a main service component and a sub-service component having a traffic message channel (TMS) and service information (SI);
demodulating the received broadcasting signal; and
classifying the multiple broadcast programs according to a broadcast program type; and displaying a broadcast program list corresponding to a plurality of broadcast program types selected by a user through a granphical user interface (170),
wherein the broadcast program list includes an ensemble showing a provider and a service showing broadcast programs; and
wherein the graphical user interface (170) comprises:
a first area (310) which enables a user to select the broadcast program type;
a second area (320) which displays the broadcast program list corresponding to the selected broadcast program type; and
a third area (330) which displays a broadcast program selected by the user from the displayed broadcast program list.

7. The method of claim 6, wherein the broadcast program list displayed in the second area (320) is arranged according to the carrier frequency.

8. The method of claim 6, wherein the broadcast program list displayed in the second area (320) is arranged according to the broadcast program type.

9. The method of any one of claims 6-8, wherein the first area (310) comprises:
a first button (314) which displays a broadcast program list of broadcast programs designated in advance by a user; and
a second button (315) which displays a broadcast program list of all the broadcast programs that can be provided to the user.

## Patentansprüche

1. Digitaler Multimedia-Rundfunkempfänger, umfassend:
einen Tuner (110), der ein Rundfunksignal empfängt, das mehrere Rundfunkprogramme jeweils mit einem der Rundfunkprogrammtypen Video, Audio und Daten, die durch eine Trägerfrequenz von mehreren Anbietern geführt werden, enthält und eine Hauptdienstkomponente und eine Subdienstkomponente mit einem Verkehrsnachrichtenkanal (TMS) und Dienstinformationen (SI) enthält;
eine Demodulationseinheit (120), die das empfangene Rundfunksignal demoduliert; und
eine Steuerung (140), die die mehreren Rundfunkprogramme gemäß einem Rundfunkprogrammtyp klassifiziert und eine Rundfunkprogrammliste anzeigt, die mehreren Rundfunkprogrammtypen entspricht, die durch einen Benutzer durch eine graphische Benutzeroberfläche (170) ausgewählt werden,
wobei die Rundfunkprogrammliste eine Zusammenstellung enthält, die einen Anbieter und einen Dienst zeigt, der Rundfunkprogramme zeigt; und
wobei die graphische Benutzeroberfläche (170) Folgendes umfasst:
einen ersten Bereich (310), der es einem Benutzer ermöglicht, den Rundfunkprogrammtyp auszuwählen;
einen zweiten Bereich (320), der die Rundfunkprogrammliste auf der Basis des ausgewählten Diensttyps anzeigt; und
einen dritten Bereich (330), der ein Rundfunkprogramm anzeigt, das durch den Benutzer aus der angezeigten Rundfunkprogrammliste ausgewählt wird.

2. Empfänger nach Anspruch 1, wobei die in dem zweiten Bereich (320) angezeigte Rundfunkprogrammliste gemäß der Trägerfrequenz angeordnet wird.

3. Empfänger nach Anspruch 1, wobei die in dem zweiten Bereich (320) angezeigte Rundfunkprogrammliste gemäß dem Rundfunkprogrammtyp angeordnet wird.

4. Empfänger nach einem der Ansprüche 1-3, wobei der erste Bereich (310) ferner Folgendes umfasst:
eine erste Schaltfläche (314), die eine Rundfunkprogrammliste von im Voraus durch den Benutzer designierten Rundfunkprogrammen anzeigt; und
eine zweite Schaltfläche (315), die eine Rundfunkprogrammliste aller Rundfunkprogramme anzeigt, die dem Benutzer bereitgestellt werden können.

5. Empfänger nach einem der vorhergehenden Ansprüche, der ferner einen Speicher (160) umfasst, der Informationen bezüglich der Trägerfrequenz speichert, wobei die Informationen den Rundfunkprogrammtyp umfassen.

6. Kanalverwaltungsverfahren eines digitalen Multimedia-Rundfunkempfängers, umfassend:
Empfangen eines Rundfunksignals, das mehrere Rundfunkprogramme jeweils mit einem der Rundfunkprogrammtypen Video, Audio und Daten, die durch eine Trägerfrequenz von mehreren Anbietern geführt werden, enthält und eine Hauptdienstkomponente und eine Subdienstkomponente mit einem Verkehrsnachrichtenkanal (TMS) und Dienstinformationen (SI) enthält;
Demodulieren des empfangenen Rundfunksignals; und
Klassifizieren der mehreren Rundfunkprogramme gemäß einem Rundfunkprogrammtyp; und Anzeigen einer Rundfunkprogrammliste, die mehreren Rundfunkprogrammtypen entspricht, die durch einen Benutzer durch eine graphische Benutzeroberfläche (170) ausgewählt werden,
wobei die Rundfunkprogrammliste eine Zusammenstellung enthält, die einen Anbieter und einen Dienst zeigt, der Rundfunkprogramme zeigt; und
wobei die graphische Benutzeroberfläche (170) Folgendes umfasst:
einen ersten Bereich (310), der es einem Benutzer ermöglicht, den Rundfunkprogrammtyp auszuwählen;
einen zweiten Bereich (320), der die Rundfunkprogrammliste entsprechend dem ausgewählten Diensttyp anzeigt; und
einen dritten Bereich (330), der ein Rundfunkprogramm anzeigt, das durch den Benutzer aus der angezeigten Rundfunkprogrammliste ausgewählt wird.

7. Verfahren nach Anspruch 6, wobei die in dem zweiten Bereich (320) angezeigte Rundfunkprogrammliste gemäß der Trägerfrequenz angeordnet wird.

8. Verfahren nach Anspruch 6, wobei die in dem zweiten Bereich (320) angezeigte Rundfunkprogrammliste gemäß dem Rundfunkprogrammtyp angeordnet wird.

9. Verfahren nach einem der Ansprüche 6-8, wobei der erste Bereich (310) Folgendes umfasst:
eine erste Schaltfläche (314), die eine Rundfunkprogrammliste von im Voraus durch einen Benutzer designierten Rundfunkprogrammen anzeigt; und
eine zweite Schaltfläche (315), die eine Rundfunkprogrammliste aller Rundfunkprogramme anzeigt, die dem Benutzer bereitgestellt werden können.

## Revendications

1. Récepteur de diffusion multimédia numérique comprenant :
un syntoniseur (110) qui reçoit un signal de diffusion comportant de multiples programmes de diffusion ayant un type de programme de diffusion qui est soit de la vidéo, soit de l'audio, soit des données, acheminés par une fréquence porteuse par une pluralité de fournisseurs, et comportant une composante de service principale et une composante de service secondaire ayant un canal de messages de trafic (TMS, Trafic Message Channel) et des informations de services (SI, Service Information) ;
une unité de démodulation (120) qui démodule le signal de diffusion reçu ; et
une unité de commande (140) qui classe les multiples programmes de diffusion en fonction d'un type de programme de diffusion et affiche une liste de programmes de diffusion correspondant à une pluralité de types de programmes de diffusion sélectionnés par un utilisateur par l'intermédiaire d'une interface utilisateur graphique (170),
dans lequel
la liste de programmes de diffusion comprend un ensemble représentant un fournisseur et un service représentant des programmes diffusés ; et
dans lequel l'interface utilisateur graphique (170) comprend :
une première zone (310) qui permet à un utilisateur de sélectionner le type de programme de diffusion ;
une deuxième zone (320) qui affiche la liste de programmes de diffusion sur la base du type de service sélectionné ; et
une troisième zone (330) qui affiche un programme de diffusion sélectionné par l'utilisateur dans la liste de programmes de diffusion affichée.

2. Récepteur selon la revendication 1, dans lequel la liste de programmes de diffusion affichée dans la deuxième zone (320) est agencée en fonction de la fréquence porteuse.

3. Récepteur selon la revendication 1, dans lequel la liste de programmes de diffusion affichée dans la deuxième zone (320) est agencée conformément au type de programme de diffusion.

4. Récepteur selon l'une quelconque des revendications 1 à 3, dans lequel la première zone (310) comprend en outre :
un premier bouton (314) qui affiche une liste de programmes de diffusion contenant des programmes de diffusion désignés à l'avance par l'utilisateur ; et
un deuxième bouton (315) qui affiche une liste de programmes de diffusion constituée de tous les programmes de diffusion pouvant être fournis à l'utilisateur.

5. Récepteur selon l'une quelconque des revendications précédentes, comprenant en outre une mémoire (160) qui stocke des informations concernant la fréquence porteuse, ces informations comprenant le type de programme de diffusion.

6. Procédé de gestion de canal d'un récepteur de diffusion multimédia numérique comprenant :
la réception d'un signal de diffusion comportant de multiples programmes de diffusion ayant chacun un type de programme de diffusion qui est soit de la vidéo,
soit de l'audio, soit des données, et acheminés par une fréquence porteuse en provenance d'une pluralité de fournisseurs, et comportant une composante de service principale et une composante de service secondaire ayant un canal de messages de trafic (TMS) et des informations de services (SI) ;
la démodulation du signal de diffusion reçu ; et
la classification des multiples programmes de diffusion en fonction d'un type de programme de diffusion ; et
l'affichage d'une liste de programmes de diffusion correspondant à une pluralité de types de programmes de diffusion sélectionnés par un utilisateur par l'intermédiaire d'une interface utilisateur graphique (170),
dans lequel la liste de programmes de diffusion comporte un ensemble représentant un fournisseur et un service représentant des programmes de diffusion ; et
dans lequel l'interface utilisateur graphique (170) comprend :
une première zone (310) qui permet à un utilisateur de sélectionner le type de programme de diffusion ;
une deuxième zone (320) qui affiche la liste de programmes de diffusion correspondant au type de programme de diffusion sélectionné ; et
une troisième zone (330) qui affiche un programme de diffusion sélectionné par l'utilisateur dans la liste de programmes de diffusion affichée.

7. Procédé selon la revendication 6, dans lequel la liste de programmes de diffusion affichée dans la deuxième zone (320) est agencée en fonction de la fréquence porteuse.

8. Procédé selon la revendication 6, dans lequel la liste de programmes de diffusion affichée dans la deuxième zone (320) est agencée en fonction du type de programme de diffusion.

9. Procédé selon l'une quelconque des revendications 6 à 8, dans lequel la première zone (310) comprend :
un premier bouton (314) qui affiche une liste de programmes de diffusion contenant des programmes de diffusion désignés à l'avance par un utilisateur ; et
un deuxième bouton (315) qui affiche une liste de programmes de diffusion constituée de tous les programmes de diffusion pouvant être fournis à l'utilisateur.
